# EUROPEAN PATENT APPLICATION

(11) **EP 2 995 518 A1**
(43) Date of publication of application: **16.03.2016**
(21) Application number: 14184488.6
(22) Date of filing: 11.09.2014
(51) Int. Cl.: B60T 17/08, F16D 65/28

(54) **Universal type spring brake chamber**

(71) Applicant: Kancioglu Otomotiv Sanayi Ve Ticaret Anonim Sirketi, 34570 Istanbul (TR)
(72) Inventor: Kancioglu, Ilhan, 34570 ISTANBUL (TR)
(74) Representative: Dereligil, Ersin

(57) **Abstract**

The spring (1.7) provides braking power when the vehicle stops for parking or emergency, the spring pressurized room (1.3) in which the compressed air necessary for caging the spring (1.7) accumulated, the piston (1.1) compresses the spring (1.7) for caging by means of the compressed air in the spring pressurized room (1.3), the piston pipe (1.2) transfers the braking power to the push rod (1.18) generated by the spring (1.7), the service room (1.5) in which the compressed air necessary for the service brake is accumulated, the air transfer holes (1.8) and the air channel (1.14) ensures the air transfer between the service room (1.5) and the spring compression area (1.6), the push rod (1.18) transfers the braking power generated by the brake chamber, the diaphragm (1.19) transfers the braking power generated by the pressurized air accumulated in the service room (1.5) to the push rod (1.18) and the return spring (1.20) helps the diaphragm (1.19) to reform back and characterized by a single rimmed housing (2.1) between the service room (1.5) and the spring pressurized room (1.3) which is combined together with the service chamber (1.4), the diaphragm (1.19) and the spring chamber (2.2) by a clamp (2.3), and has bearing center for the piston pipe (1.2).

## Description

### Technical Field

The invention is related to the brake system in commercial vehicles.

The invention is especially related to the combined brake actuators used for M(carriage of passengers), N(carriage of goods) and O(trailers) type of vehicles categorized in automotive sector.

### State of Art

Nowadays, the brake system is the most important part of the vehicles. Actually the brake system is energy conversion system that converts the potential energy produced by a compressed air / oil to kinetic energy. Tons of pressure is applied through each brake actuator. An additional power is accumulated also in the governor by a motor power in the modern systems.

Brake system consists mainly: Governor which is aligned with the steering wheel connected to foot brake pedal directly and pneumatic pressure to be converted to a mechanical energy is accumulated in the system by means of a valve controlled by that pedal. High pressure "steel pipes" and "flexible hose"s connect the governor to the each brake actuators. "An hydraulic system" or an "air compressor" generates hydraulic/pneumatic pressure necessary for braking action and designed to operate in heavy conditions. "The front and the rear brake linings(pads)" are pushed by brake actuators and than stop or decelerate the vehicle by means of a friction on "the drum or the disc".

In vehicles, the pneumatic items converting the compressed air generated by an air compressor to mechanical power whenever the driver wants and what level the driver pushes the brake pedal is called "brake chamber".

In the market, the brake chambers known are manufactured as Diaphragm/Diaphragm(D/D) and Diaphragm/Piston(D/P) being two types.

The mechanism of the prior art: While the vehicle stops the spring brake (1) is active(on) and the service brake is passive(off). The spring (1.7) is in the released position in B→A direction and the air pressure in both the service room (1.5) and the spring room (1.3) as in the whole brake system is 0(zero). The air compressor starts to produce necessary air pressure when the engine of the vehicle starts to work on than the system transfers the pressurized air to the spring pressurized room (1.3) and pressurized air compresses the spring (1.7) that is to said that the spring brake is off. In this condition, the command lever of the spring brake is released that is off however the service brake is to be applied by means of foot pedal whenever deriver wants.

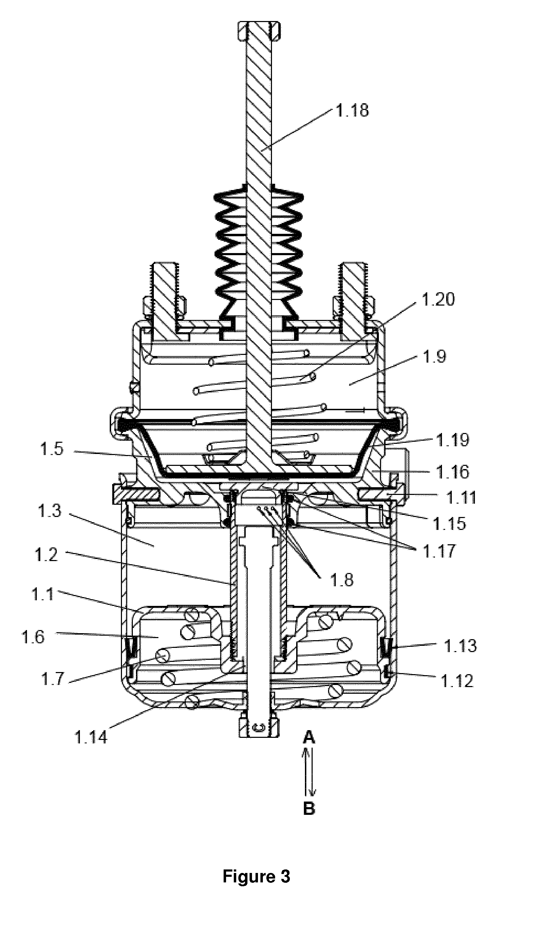

The air compressor supplies pressurized air to the system as the vehicle engine and the compressor works. Service brake starts to brake when the push rod (1.18) moves in B→A direction by means of the diaphragm (1.19) activated by pressurized air transferred to the service room (1.5) with the help of foot pedal. Spring brake starts to brake together with the pressurized air in the spring pressurized room (1.3) starts to exhaust by a control valve than the spring (1.7) releases in the B→A direction and the piston pipe (1.2) pushes the push rod (1.18) together with diaphragm (1.19) when the vehicle is parked(by hand lever). The diaphragm (1.19) in the service room (1.5) pushes the push rod (1.18) as the spring (1.7) is released in the B→A direction since there is no reverse pressure power in the atmospheric area (1.9) and so generates brake power (Figure 3).

The air transfer holes (1.8) as shown in Figure 3 are closed in the position between the o-rings (1.17) on the inlet body (1.16) while the spring (1.7) is compressed. The spring (1.7) causes the air transfer holes (1.8) to open by means of the piston pipe's (1.2) movement in B→A direction(because of that the pressurized air in the pressurized room (1.3) is exhausted) and so the air connection between the spring compression area (1.6) and the service room (1.5) makes the spring (1.7) easily released since the vacuum to be generated is prevented. In reverse (while parking off by transferring the pressurized air to the pressurized room (1.3)) the air transfer holes (1.8) transfer the air from the spring compression area (1.6) to the service room (1.5) with the movement of the piston pipe (1.2) in A→B direction up to the position the holes (1.8) to be closed that is all to make the spring (1.7) easily compressed.

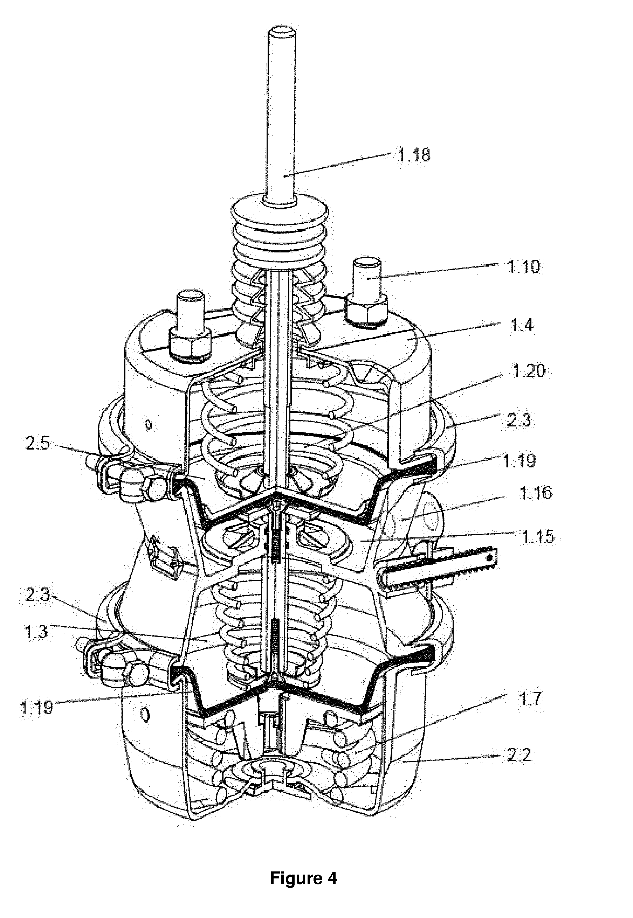

The inlet body (1.16) for both type of brake chamber (D/D and D/P) having air ports to the service room (1.5) and to the spring pressurized room (1.3) in which the service room (1.5) is adjacent to the spring pressurized room (1.3), is seen on the Figure 3 and 4.

The availability of both type of brake chamber as D/D and D/P in the market served for users has negative aspects for both manufacturers and the users in terms of high cost of inventory and procurement and long delivery time.

Still the brake chambers are heavy and big enough. The weight of any component on the vehicle is an important factor and affects the operational cost directly. The bigger dimension complicates the adaptation of the brake chambers to different type of vehicles.

There is a risk of safety and leakage in the prior art resulting from using the inlet body as casted aluminium. There is always risk of severe accident because of high forced spring resulting personal injury during the process of installation and removal of the brake chambers on the vehicle.

The summary of the application reached by technical research numbered JP2011085227 is related with a structure for protection of the brake chambers from dust; it doesn't cover a new design for the D/P type brake chambers having single rimmed housing instead of double rimmed housing between the service room and the spring pressurized room used for M(carriage of passengers), N(carriage of goods) and O(trailers) type of vehicles. In addition, the application doesn't bring a solution for the disadvantages stated above.

The summary of the application reached by technical research numbered CN201991976 is related with the diaphragms used in the spring brake chambers for vehicles. Besides, the aim of the application doesn't cover an innovative solution for the negative aspects stated above.

As a result it is required to activate an improvement in the technical area related to the subject since the current studies is not sufficient enough for the design of the prior art.

### The Purpose of the Invention

The invention aims to bring a solution for the negative aspects for the current spring brake chamber stated above, constructed with the inspiration from the current state of art.

The another purpose of the invention is to manufacture a single type of a spring brake chamber used instead of the spring brake chamber type D/P and the type D/D. So that the cost of the procurement process will decrease incredibly with the decrease in the cost of the inventory and decrease in the delivery time for both the buyer and the seller.

The another purpose of the invention is to reduce the weight of the spring brake chamber.

The weight of any component on the vehicle is an important factor that affects the operational cost directly.

The another purpose of the invention is to make the dimension of the spring brake chamber smaller. The length of the spring chamber will then be shorter with the help of the invention. It will be more practical to adopt the spring brake chamber to different type of vehicles modified with shorter dimension.

The another purpose of the invention is to shorten the time duration of assembling during manufacturing. To combine the whole body with a single clamp will decrease the assembly time enormously.

The another purpose of the invention is to decrease the cost of production. The invention ensured that the aluminium casted inlet body, a clamp, a diaphragm and a return spring used in D/D type spring brake chamber are eliminated against using only a single rimmed housing which is made by alloyed metal. Besides, the invention ensured that aluminium casted inlet body and the mountings of the spring chamber used in D/P type spring chamber are eliminated against using only a single rimmed housing which is made by alloyed metal releasing the cost of the working and procurement down. With the help of new designed brake chamber subjected to the invention it would be possible to prefer a single type of spring brake chamber instead of D/D or D/P type of spring brake chamber. Because, the cost of the spring brake chamber subjected to the invention will be lower than the cost of D/P type spring brake chamber whereas close to the cost of D/D type spring brake chamber.

The another purpose of the invention is to eliminate the risk of safety and leakage applying the single rimmed housing part used in new system made in alloyed metal. The spring brake chamber subjected to the invention has advantage for the users in terms of safety, economy and workmanship.

The invention ensures a spring brake chamber with higher lifetime, higher performance and higher safety limit with no need to change the practice of the user on brake chamber applications.

The invention makes change of the seal set and the diaphragm by user more practical to prevent performance loss in case of heavy use condition if the main components are not damaged.

The invention focused on the aims stated above is comprised by the spring provides braking power when the vehicle stops for parking or in emergency, the spring pressurized room in which the compressed air necessary for caging the spring accumulated, the piston compresses the spring for caging by means of the compressed air in the spring pressurized room, the piston pipe transfers the braking power to the push rod generated by the spring, the service room in which the compressed air necessary for the service brake is accumulated, the air transfer holes and the air channel ensures the air transfer between the service room and the spring compression area, the push rod transfers the braking power generated by the brake chamber, the diaphragm transfers the braking power generated by the pressurized air accumulated in the service room to the push rod and the return spring helps the diaphragm to reform back and characterized by a single rimmed housing between the service room and the spring pressurized room which is combined together with the service chamber, the diaphragm and the spring chamber by a clamp, and has bearing center for the piston pipe. The said single rimmed housing is made of alloyed metal.

Additionally the invention is comprised by the rim of the spring chamber on which the single rim house is positioned, a service air port bridged to the single rim house which is positioned on the said spring chamber and an air port for the spring chamber positioned on the said spring chamber.

To realize the aims of the invention, the said diaphragm is positioned on the single rim house. Then the service chamber is positioned on the spring chamber directly together with the return spring, the push rod and the diaphragm.

The invention is comprised by a piston seal ensures impermeability between the spring pressurized room and the spring compression area while the piston moves in A→B direction, the o-rings ensure the impermeability between the service room and the spring pressurized room and a cap prevents the air connection between the service room and the spring pressurized room when the spring brake is off. The invention is also comprised by a bearing ring supports the alignment of the piston when moving in A→B direction.

The structural and characteristic specifications of the invention and the advantages will be better understood with the help of Figures given below and the detail explanation referring those Figures, so the evaluation of the invention should be carried out accordingly.

### Figures for better understanding the invention

Figure 1, General sectional view of the invention.

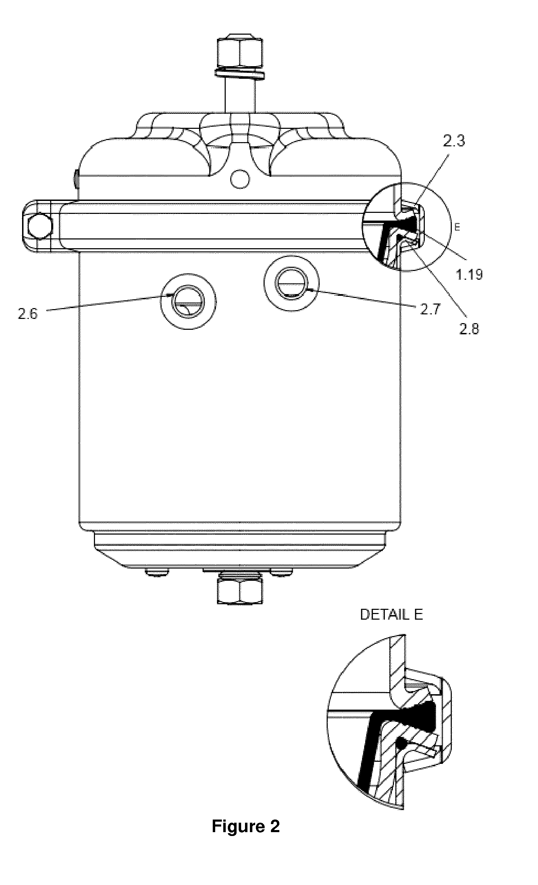

Figure 2, Sectional view of the invention.
Figure 3, General sectional view of the spring brake chamber type D/P which is prior art.
Figure 4, General sectional view of the spring brake chamber type D/D which is prior art.

There is no need that the drawings to be scaled and the details which are not necessary to understand the invention would be neglected. Besides the components which are identical or have same function substantially are referenced by same numbers.

### Explanation of the Reference Numbers

1. Brake Chamber
   1.1. Piston
   1.2. Piston Pipe
   1.3. Spring Pressurized Room
   1.4. Service Chamber
   1.5. Service Room
   1.6. Spring Compression Area
   1.7. Spring
   1.8. Air Transfer Holes
   1.9. Atmospheric Area
   1.10. Mounting Bolts
   1.11. Mountings of the Spring Chamber
   1.12. Bearing Ring
   1.13. Piston Seal
   1.14. Air Channel
   1.15. Cap
   1.16. Inlet Body
   1.17. O-ring
   1.18. Push Rod
   1.19. Diaphragm
   1.20. Return Spring
   2.1. Single Rim Housing
   2.2. Spring Chamber
   2.3. Clamp
   2.4. Release Bolt
   2.5. Push Rod Flange
   2.6. Air Port for the Spring Chamber
   2.7. Service Air Port
   2.8. Spring Chamber Rim
   A-B Direction

### Detail Explanation of the Invention

In this section, the preferred structure of the spring brake chamber (1) subjected to the invention is clarified such that there is no limiting effect for the sake of better understanding the subject.

While the vehicle stops the spring brake (1) is active(on) and the service brake is passive(off). The spring (1.7) is in the released position in B→A direction and the air pressure in both the service room (1.5) and the spring room (1.3) as in the whole brake system is 0(zero). The air compressor starts to produce necessary air pressure when the engine of the vehicle starts to work on than the system transfers the pressurized air to the spring pressurized room (1.3) by means of the air port (2.6) and pressurized air compresses the spring (1.7) that is to said that the spring brake is off. In this condition, the command lever of the spring brake is released that is off however the service brake is to be applied by means of foot pedal whenever deriver wants.

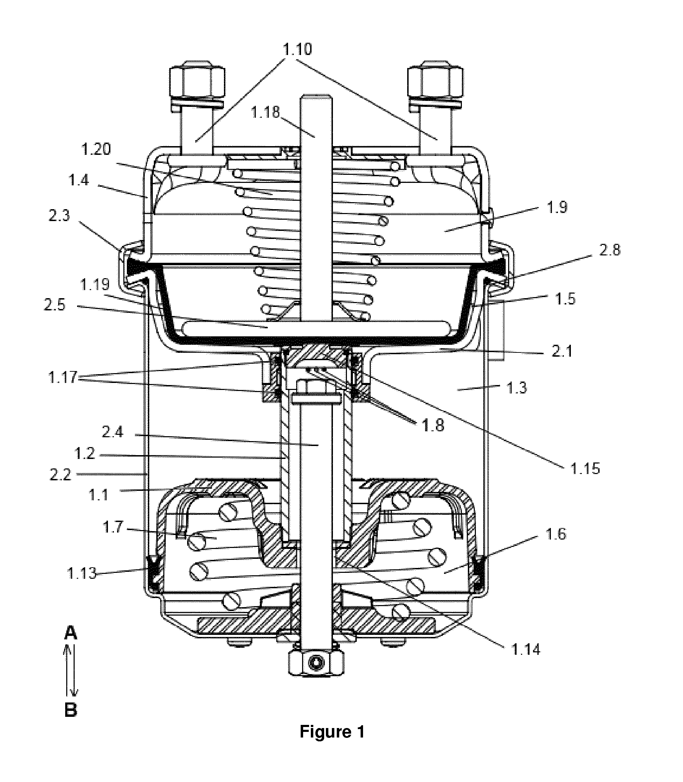

The air compressor supplies pressurized air to the system as the vehicle engine and the compressor works. Service brake starts to brake when the push rod (1.18) moves in B→A direction by means of the diaphragm (1.19) activated by pressurized air transferred to the service room (1.5) with the help of foot pedal. Spring brake starts to brake together with the pressurized air in the spring pressurized room (1.3) starts to exhaust by a control valve than the spring (1.7) releases in the B→A direction and the piston pipe (1.2) pushes the push rod (1.18) together with diaphragm (1.19) when the vehicle is parked(by hand lever). The diaphragm (1.19) in the service room (1.5) pushes the push rod (1.18) as the spring (1.7) is released in the B→A direction since there is no reverse pressure power in the atmospheric area (1.9) and so generates brake power (Figure 1).

The air transfer holes (1.8) as shown in Figure 1 are closed in the position between the o-rings (1.17) on the inlet body (1.16) while the spring (1.7) is compressed. The spring (1.7) causes the air transfer holes (1.8) to open by means of the piston pipe's (1.2) movement in B→A direction (because of that the pressurized air in the pressurized room (1.3) is exhausted) and so the air connection between the spring compression area (1.6) and the service room (1.5) makes the spring (1.7) easily released since the vacuum to be generated is prevented. In reverse (while parking off by transferring the pressurized air to the pressurized room (1.3)) the air transfer holes (1.8) transfer the air from the spring compression area (1.6) to the service room (1.5) with the movement of the piston pipe (1.2) in A→B direction up to the position the holes (1.8) to be closed that is all to make the spring (1.7) easily compressed.

The piston (1.1) shown in Figure 1 compresses the spring (1.7) by means of the pressurized air accumulated in the spring pressurized room (1.3). The piston pipe (1.2) transfers the braking power generated by the spring (1.7) to the push rod (1.18). The piston pipe (1.2) is preferred to be made by aluminium. The said spring pressurized room (1.3) is the area in which the pressurized air is accumulated to compress the spring (1.7).

The service room (1.5) is the section in which the pressurized air necessary for service braking is accumulated. The spring compression area (1.6) is the section that has the working limits of the spring (1.7). The spring (1.7) generates the braking power necessary in case of parking or emergency. The air transfer holes (1.8) transfer the air from the spring compression area (1.6) to the service room (1.5) when the spring (1.7) is compressed (parking off) whereas transfer the air from the service room (1.5) to the spring compression area (1.6) while parking on.

The section in which the push rod (1.18) moves towards in A→B direction while braking on is the atmospheric area (1.9). The push rod (1.18) transmits the brake power. The diaphragm (1.19) transmits the power generated by means of pressurized air in the service room (1.5) to the push rod (1.18). The return spring (1.20) pushes back the said diaphragm (1.19) when the service brake is off.

The bearing (1.12) ring supports the alignment of the piston (1.1) moving in A→B direction as shown in Figure 1. The piston seal (1.13) provides the impermeability between the pressurized room (1.3) and the spring compression area (1.6) when the piston (1.1) moves in A→B direction.

The air transfer between the spring compression area (1.6) and the service room (1.5) is through air channel (1.14). The air connection between the spring compression area (1.6) and the service room (1.5) is prevented by a cap (1.15) when the spring brake is off. The single rimmed housing (2.1) which is connected to the service air port (2.7) for the service room (1.5) is made of alloyed metal. The o-rings (1.17) provide the impermeability between the service room (1.5) and the pressurized room (1.3) when the aluminium piston pipe (1.2) moves in both direction A and B.

The single rimmed housing (2.1) between the service room (1.5) and the spring pressurized room (1.3) bridged by the service air port (2.7) positioned on the spring chamber (2.2) is seen in Figure 1. The said single rimmed housing (2.1) guides the piston pipe (1.2) which transfers the braking power and the motion generated by the spring (1.7) to the push rod (1.18).

The said single rimmed housing (2.1) is positioned on the spring chamber rim (2.8). The diaphragm (1.19) having profiled rim is positioned on the single rimmed housing (2.1). The service chamber (1.4) together with the return spring (1.20) and the push rod (1.18) is positioned then on the diaphragm (1.19). The clamp (2.3) combines the spring chamber rim (2.8), the single rimmed housing (2.1), the diaphragm (1.19) and the service chamber (1.4) altogether. There is an air port (2.7) for the service room bridged to the single rimmed housing (2.1) and another air port (2.6) connected for the spring chamber positioned according to the service air port (2.7) on the spring chamber (2.2).

## Claims

1. A brake chamber (1) which consists a spring (1.7) provides braking power when vehicle stops for parking or emergency, a spring pressurized room (1.3) in which compressed air necessary for caging the spring (1.7) accumulated, a piston (1.1) compresses the spring (1.7) for caging by means of compressed air in the spring pressurized room (1.3), a piston pipe (1.2) transfers the braking power to a push rod (1.18) generated by the spring (1.7), a service room (1.5) in which the compressed air necessary for the service brake is accumulated, air transfer holes (1.8) and air channel (1.14) ensures the air transfer between the service room (1.5) and spring compression area (1.6), the push rod (1.18) transfers the braking power generated by the brake chamber (1), a diaphragm (1.19) transfers the braking power generated by the pressurized air accumulated in the service room (1.5) to the push rod (1.18) and a return spring (1.20) helps the diaphragm (1.19) to reform back and **characterized in** comprising a single rimmed housing (2.1) between the service room (1.5) and the spring pressurized room (1.3) which is combined together with a service chamber (1.4), the diaphragm (1.19) and a spring chamber (2.2) by a clamp (2.3), and has a bearing center for the piston pipe (1.2).

2. The brake chamber (1) according to claim 1; is **characterized in** comprising a spring chamber rim (2.8) positioned on the single rimmed housing (2.1) by a single clamp (2.3).

3. The brake chamber (1) according to claim 1; is **characterized in that** the said diaphragm (1.19) is positioned on the single rimmed housing (2.1).

4. The brake chamber (1) according to claim 1; is **characterized in that** the service chamber (1.4) is positioned on the spring chamber (2.2) directly together with the return spring (1.20), the push rod (1.18) and the diaphragm (1.19).

5. The brake chamber (1) according to claim 1; is **characterized in that** the said clamp (2.3) combines the spring chamber (2.2), the single rimmed housing (2.1), the diaphragm (1.19) and the service chamber (1.4) together.

6. The brake chamber (1) according to claim 1; is **characterized in** comprising a service air port (2.7) bridged to the single rimmed housing (2.1) and positioned on the spring chamber (2.2).

7. The brake chamber (1) according to claim 1; is **characterized in** comprising a air port for the spring chamber (2.6) positioned on the spring chamber (2.2).

8. The brake chamber (1) according to claim 1; is **characterized in** comprising a piston seal (1.13) ensures the impermeability between the spring pressurized room (1.3) and the spring compression area (1.6) when the piston (1.1) is moving in A→B direction.

9. The brake chamber (1) according to claim 1; is **characterized in** comprising o-rings (1.17) ensures impermeability between the service room (1.5) and the spring pressurized room (1.3) when the piston pipe (1.2) is actuated.

10. The brake chamber (1) according to claim 1; is **characterized in** comprising a cap (1.15) prevents the air transfer between the said service room (1.5) and the said spring compression area (1.6) when the spring brake is off.

11. The brake chamber (1) according to claim 1; is **characterized in** comprising a bearing ring (1.12) guides the piston pipe (1.1) when the piston (1.1) is moving in A→B direction.

12. The brake chamber (1) according to claim 1; is **characterized in that** the single rimmed housing (2.1) which is made of alloyed metal.
